# EUROPEAN PATENT SPECIFICATION

(11) **EP 0 579 307 B1**
(45) Date of publication and mention of the grant of the patent: **09.04.1997**
(21) Application number: 93201888.0
(22) Date of filing: 29.06.1993
(51) Int. Cl.: G01P 3/486, G01P 3/49

(54) **Speedometer**
Geschwindigkeitsmesser
Tachymètre

(30) Priority: 11.07.1992 GB 9214787
(43) Date of publication of application: 19.01.1994
(73) Proprietor: DELCO ELECTRONICS OVERSEAS CORPORATION, Detroit, Michigan 48202 (US)
(72) Inventor: Kerr, Geoffrey Howard, Ormskirk, Lancashire L39 3NU (GB); Sherwood, Donald George, Aughton, Lancashire L39 5AA (GB)
(74) Representative: Denton, Michael John

(56) References cited:
- DE-A- 3 918 152
- FR-A- 2 437 623
- GB-A- 2 054 138

## Description

This invention relates to a speedometer, and in particular to an improved magnet assembly for the speedometer.

In known arrangements, a speedometer comprises a drive shaft (which usually receives a mechanical cable drive, for example, from a transmission of a motor vehicle) connected to a magnet assembly to rotate the magnet assembly. The magnetic flux produced by the rotating magnet assembly drives, by way of an aluminium or copper cup, a pointer spindle and pointer of the speedometer to provide an indication of speed. The magnet assembly, which is usually a force-fit on the end of the drive shaft, comprises a magnet and temperature compensator encapsulated in a plastics moulding. The underside (that is, the side directed away from the pointer) of the moulding may have a pattern printed thereon. An optical sensor directed towards the pattern produces a series of electrical pulses as the pattern rotates which can be used in computer-based control units within the vehicle.

Because of the complicated shape that the plastics material has to flow around in order to create the encapsulated part, the plastics material must be of a type which is free-flowing. This has the disadvantage of failing to produce a stable environment once the magnet assembly has been fitted to the end of the drive shaft. Temperature changes can induce relaxation of the stresses within the moulding, leading to possible movement of the magnet relative to other components within the speedometer. This can result in inaccuracy in the speedometer reading. This problem can be overcome by the additional, and expensive, operation of subjecting the assembled drive shaft and magnet assembly to a temperature soak. Another disadvantage of having to use a free-flowing plastics material is that the material is subjected to shrinkage after moulding which produces an uneven surface on the underside of the magnet assembly, making accurate printing of the pattern very difficult. DE-A-3918152 discloses such a known speedometer.

It is an object of the present invention to provide an improved magnet assembly for a speedometer.

To this end, a speedometer in accordance with the present invention is characterised over DE-A-3918152 by the features specified in the characterising portion of Claim 1.

Preferably, where the mounting means is metallic, the metallic mounting means comprises a plate which is substantially annular and flat, and a cylindrical portion projecting away from a side of the plate directed towards the indicating means, the magnet being positioned to surround the cylindrical portion. In this case, the cylindrical portion preferably has a free end which is rolled over to secure the magnet to the plate. The metallic mounting means is preferably die-cast in one-piece. Alternatively, the metallic mounting means may be die-cast in one-piece to partially or fully surround the magnet to secure the magnet to the metallic mounting means.

Preferably, the optical contrast means comprises shaped portions which project away from the side of the metallic mounting means directed away from the indicating means, the shaped portions being substantially equidistantly spaced around the outer circumference of the side in a castellated formation, and being substantially the same shape and size, the shaped portions having a surface which is of optical contrast to the surface of the metallic mounting means intermediate the shaped portions. In this case, the surface of each shaped portion preferably is polished, and the surface of the metallic mounting means intermediate the shaped portions is roughened. The shaped portions preferably have the shape of a truncated sector.

As a further alternative, the mounting means may be die cast of metallic material, or moulded from heat-resistant plastics, in one-piece in the form of a bush. In this case, the optical contrast means preferably comprises a disc which is substantially annular, and which is positioned on the opposite side of the magnet to the indicating means, the disc having a number of apertures formed therein adjacent its outer circumference, the apertures being substantially equidistantly spaced around the outer circumference, and being substantially the same shape and size, the apertures forming an optical contrast to the surface of the disc intermediate the apertures. Preferably, the disc is bent such that the portion of the disc containing the apertures is spaced from the magnet. In this case, an annular plastics disc is preferably positioned in the space between the portion of the disc and the magnet, the plastics disc being of a colour to enhance the optical contrast between the apertures in the disc and the surface of the disc between the apertures. The plastics disc preferably has upstanding lugs between which the magnet is located. Preferably the disc is of polished non-ferrous metallic material, and the plastics disc is black in colour.

Preferably, where the mounting means is metallic, the metallic mounting means is formed from a non-ferrous metal or metal alloy. The metallic mounting means is preferably of a zinc-aluminium alloy.

The mounting means preferably has a bore which is centrally positioned and which has a diameter of a size to make an interference fit with the one end of the drive shaft.

The present invention overcomes the problems associated with using a free-flowing plastics moulding in the magnet assembly in that the mounting means is not affected in the same way by temperature variations, thereby providing a stable environment for the magnet assembly. The need for a temperature soak in the assembly operations is no longer required. Further, shaped patterns may be formed on the underside of a metallic mounting means to provide the required optical contrast without the problem of an uneven surface, and potentially without the need for a printing operation. Alternatively, a disc with apertures therein may provide the required optical contrast to again overcome the problems of uneven surfaces and printing. Use of a metallic surface provides improved reflective qualities for the required optical contrast relative to the free-flowing plastics moulding. The improved optical contrast between the reflective and non-reflective surfaces provides better electrical pulses from the optical sensor, thereby providing advantages in respect of the electrical circuitry associated therewith. Further, in comparison to the use of a free-flowing plastics moulding, the present invention allows the shape of the magnet to be easily altered if required, and also allows the size of the magnet to be altered such that the outer circumferential edge of the magnet can be placed nearer the magnetically responsive means to provide improved response and hence a more accurate indication of speed.

The present invention will now be described, by way of example, with reference to the accompanying drawings, in which:-
Figure 1 is a partial cross-section of a first embodiment of speedometer in accordance with the present invention;
Figure 2 is a view of the underside of the magnet assembly of the speedometer shown in Figure 1;
Figure 3 is a partial cross-section of a second embodiment of speedometer in accordance with the present invention;
Figure 4 is an exploded view of the magnet assembly of the speedometer shown in Figure 3;
Figure 5 is a partial cross-section of an alternative arrangement of the second embodiment of speedometer as shown in Figure 3;
Figure 6 is an exploded view of a magnet assembly of a further alternative arrangement of the second embodiment as shown in Figure 3; and
Figure 7 is a perspective view of the assembled magnet assembly of Figure 6.

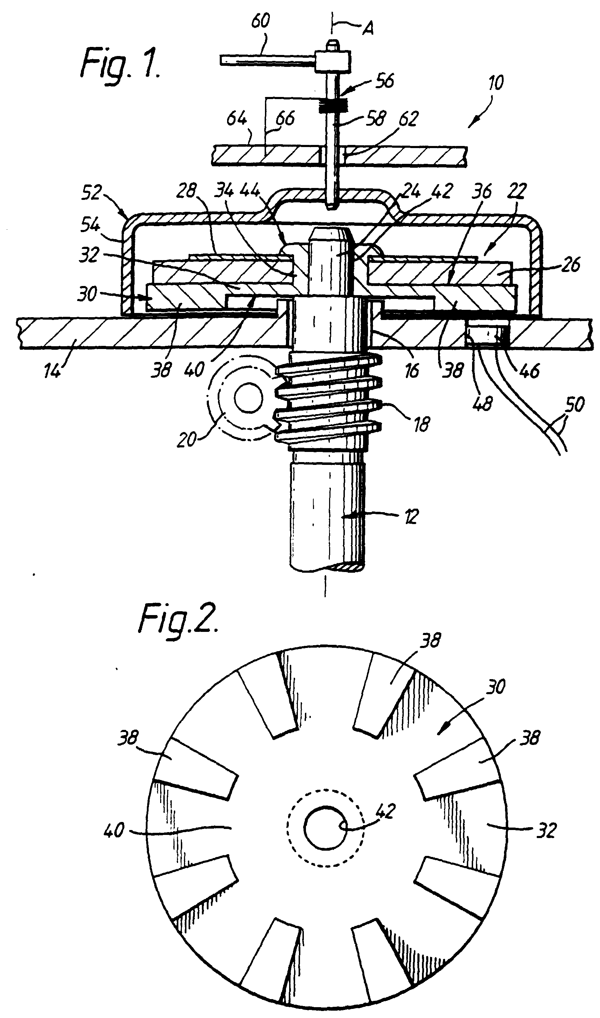

Referring to Figures 1 and 2 of the drawings, a speedometer 10 in accordance with the present invention is shown. Some of the parts of the speedometer have been omitted for the sake of clarity. Those parts which are missing are standard parts which are well known to those skilled in the art. The speedometer 10 comprises a drive shaft 12 which is connected to be driven by a cable (not shown) connected to a transmission of a motor vehicle. The drive shaft 12, when driven by the cable, rotates about an axis A relative to a fixed part 14 of a housing of the speedometer. Bearing means 16 secured to the fixed part 14 rotatably mounts the drive shaft 12 to the fixed part 14. The drive shaft 12 can include a worm gear 18 for driving a second worm gear 20 which actuates an odometer as is well known to those skilled in the art.

A magnet assembly 22 is secured to one end 24 of the drive shaft 12 and rotates with the drive shaft. The magnet assembly 22 comprises a magnet 26, a temperature compensator 28, and a metallic mounting means 30. The temperature compensator 28 provides magnetic flux stability throughout the normal operational temperature range of the speedometer 10. The metallic mounting means 30 is die cast in one-piece from a zinc-aluminium alloy and comprises a plate 32 which is substantially annular and flat, with a cylindrical portion 34 projecting away from the upperside 36 of the plate, and a number of shaped portions 38 projecting away from the underside 40. The cylindrical portion 34 is centrally positioned and defines a bore 42 which has a diameter sized to make an interference fit with the end 24 of the drive shaft 12 to secure the magnet assembly 22 thereto. The magnet 26 is positioned to surround the cylindrical portion 34, with the temperature compensator 28 place on top of the magnet, and the free end 44 of the cylindrical portion is rolled over (in a similar manner to a rivet) to secure the magnet and temperature compensator to the metallic mounting means 30. The shaped portions 38 are substantially identical in shape and size, and substantially equidistantly spaced around the outer circumference of the underside 40 of the plate 32 - see Figure 2 - to produce a castellated formation. The shaped portions 38 preferably have the shape of a truncated sector. The surface of each shaped portion 38 is highly polished, whereas the surface of the underside 40 of the plate 32, at least between the shaped portions, is left unpolished or is roughened, for example, by spark erosion, so as to provide an optical contrast between the surface of each shaped portion and the surface of the underside of the plate. To substantially prevent degrading through oxidation, the surfaces may be subjected to an anodising treatment which increases the reflective nature of the polished surface of each shaped portion 38 and dulls the surface of the underside 40 of the plate 32 intermediate the shaped portions.

An optical sensor 46 is secured in an aperture 48 in the fixed part 14 of the speedometer housing below the shaped portions 38. As the plate 32 rotates, the optical contrast between the surface of each shaped portion 38 and the surface of the underside 40 of the plate 32 produces an electrical pulse in leads 50 attached to the optical sensor. These pulses, which provide an electrical signal indicative of the speed of the motor vehicle, can be fed to computer-based control units (not shown) in the motor vehicle for controlling other functions within the motor vehicle. The number of pulses per revolution of the magnet assembly 22 is obviously dependent on the number of shaped portions 38.

A magnetically responsive means 52 in the form of a cup 54 is spaced from, and substantially surrounds, the outer circumference of the magnet assembly 22. The cup 54 is made from any suitable non-magnetic, electrically conductive, metal or metal alloy, such as aluminium or copper. The cup 54 is secured to indicating means 56 comprising a pointer spindle 58 and a pointer 60. The pointer spindle 58 has a longitudinal axis aligned with the axis A, and is rotatably mounted, by way of bearing means 62, to another fixed part 64 of the speedometer housing. The pointer 60 is secured to the pointer spindle 58. A spiral or hair spring 66 is secured between the pointer spindle 58 and the fixed part 64.

In use, as the motor vehicle accelerates from rest, the drive shaft 12 rotates about axis A, thereby causing the magnet assembly to also rotate about axis A. The rotation of the magnet 26 creates electrical (eddy) currents in the cup 54 due to the rotation of the magnetic field produce by the magnet. The eddy currents induced in the cup 54 produce their own magnetic field which interacts with the magnetic field of the magnet to produce a torque which tends to rotate the cup about axis A in the same direction as the magnet 26. The bias exerted by the spiral spring 66 acts against the action of this torque, to restrict the movement of the cup to that of a pivoting action about the axis A. The higher the speed of the motor vehicle, the faster the rotation of the magnet 26, and the greater the angle that the cup 54 (and hence, the pointer 60) pivots through. Consequently, the angle through which the pointer 60 moves provides an indication of the speed of the motor vehicle.

For the sake of clarity, the upperside 36 of the plate 34 is the side facing the pointer 60, and the underside 40 is the side facing away from the pointer.

Various alterations can be made to the above embodiment within the scope of the present invention. For example, the magnet and temperature compensator may be secured to the metallic mounting means by any suitable arrangement other than riveting. The metallic mounting means may be die-cast in one-piece in a mould with the magnet and temperature compensator pre-positioned in the mould to produce a magnet assembly in which the metallic mounting means partially or fully surrounds the magnet and temperature compensator to secure the magnet and temperature compensator. The optical contrast between the surface of each shaped portion and the surface of the underside of the metallic mounting means may alternately be formed by polishing the underside of the metallic mounting means, and roughening the surface of each shaped portions. As a further alternative, the surface of each shaped portion may be painted to provide the optical contrast, although this arrangement introduces an additional operation in the assembly of the speedometer. The metallic mounting means may be formed from two or more pieces, however such an arrangement would make assembly more complicated.

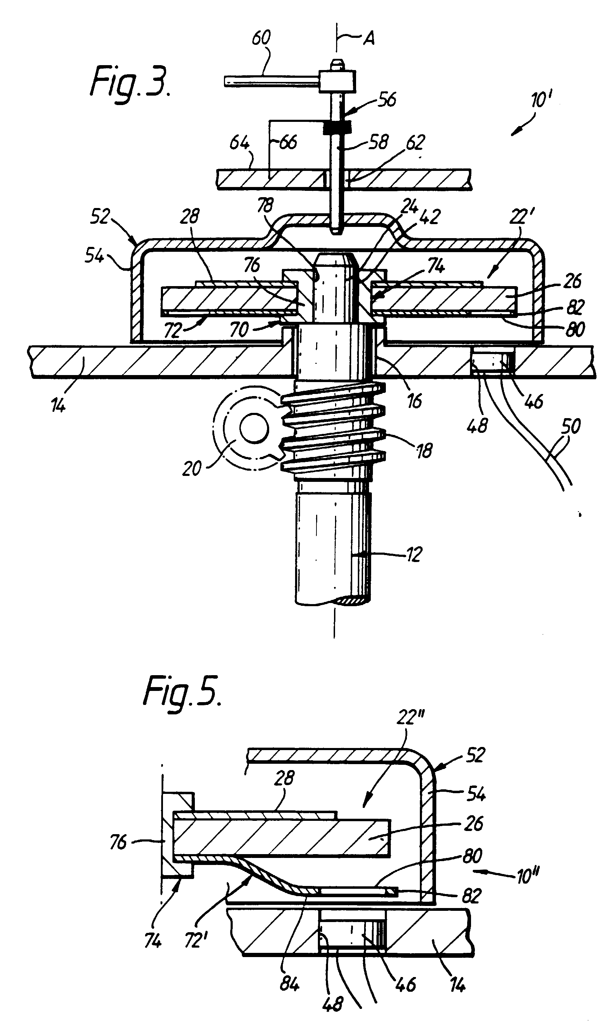

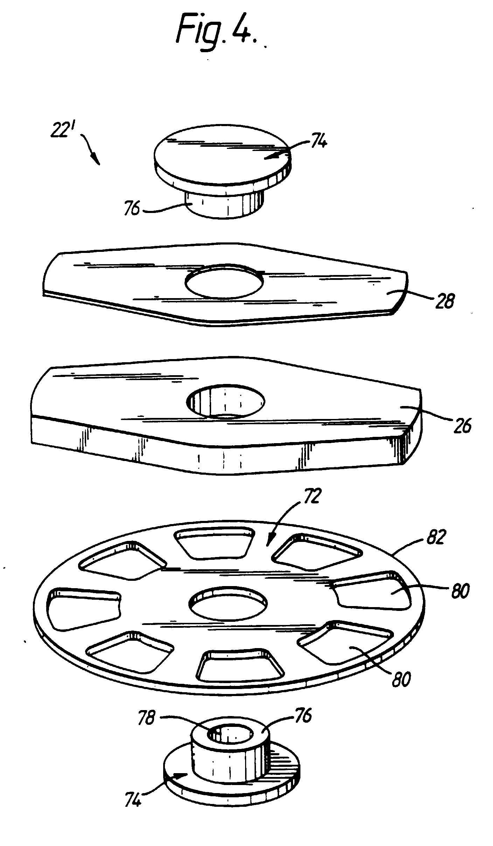

In the second embodiment of speedometer 10', as shown in Figure 3, parts which are substantially the same as those shown in Figure 1 have been given the same reference numeral. In this arrangement of speedometer 10', the magnet assembly 22' (which is shown in an exploded view in Figure 4) comprises the magnet 26, the temperature compensator 28, mounting means 70, and a disc 72. The mounting means 70 is die cast from metallic material or moulded from heat-resistant plastics in one-piece (the two parts shown in Figure 4 are merely for illustrative purposes) in the form of a bush 74 having a bobbin shape to secure together the other parts of the magnet assembly 22'. The bush 74 has a cylindrical portion 76 which defines a bore 78 which has a diameter sized to make an interference fit with the end 24 of the drive shaft 12. The disc 72 (which is positioned on the opposite side of the magnet 26 to the indicating means 56) is substantially annular in shape and is preferably made from a non-ferrous or non-magnetic metal or metal alloy (such as polished aluminium or bright stainless steel). The disc 72 is substantially flat and has a number of apertures 80 punched or otherwise formed therein. The apertures 80 are formed in the disc 72 adjacent its outer circumference 82, are substantially equidistantly spaced around the outer circumference, and are substantially the same shape and size. The apertures 80 and the portions of the disc 72 between the apertures form an optical contrast (as detailed above with regard to the shaped portions 38 of the first embodiment in Figures 1 and 2) for the optical sensor 46. The bush 74 (where metallic) is preferably formed from a zinc-aluminium alloy. Where the bush 74 is of plastics material, the plastic is both strong and temperature stable, that is, not free-flowing.

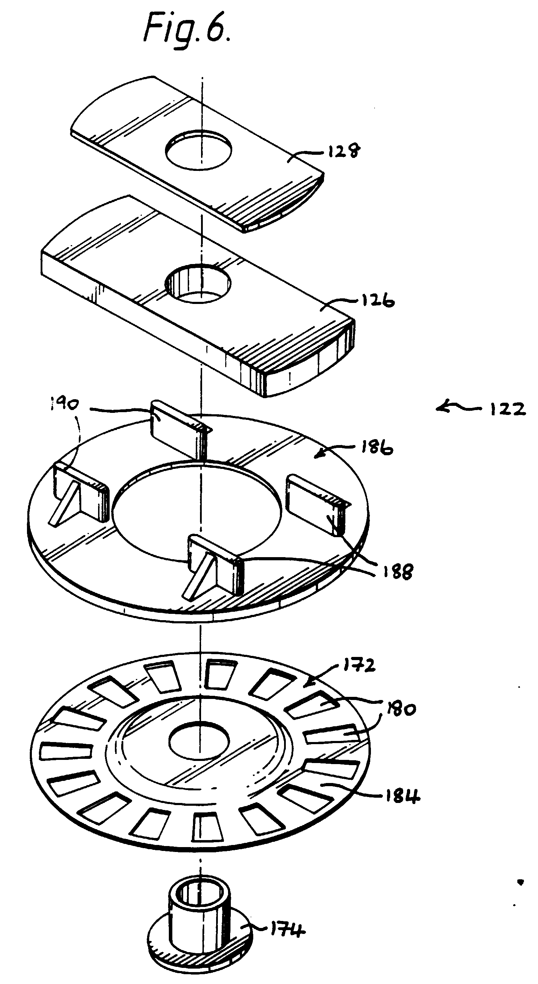

Figure 5 shows a further alternative embodiment of speedometer 10'' in accordance with the present invention which is a modification of the second embodiment shown in Figures 3 and 4. Again, like parts have been given the same reference numerals as those in Figures 3 and 4. In this case, the disc 72' of the magnet assembly 22'' is bent such that the portion 84 of the disc containing the apertures 80 is still substantially flat but is spaced from the magnet 26. This brings the apertures 80 closer to the optical sensor 46 to provide a more noticeable optical contrast for the optical sensor.

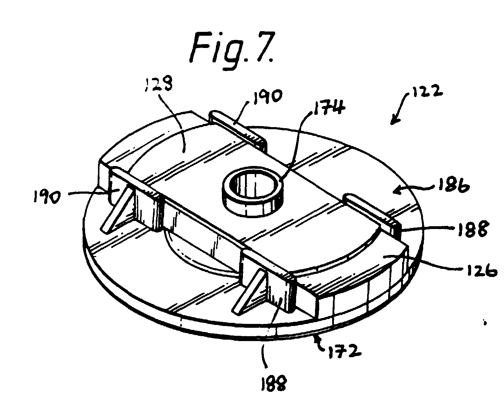

Figures 6 and 7 show a still further alternative embodiment of speedometer 110 in accordance with the present invention which is a modification of the second embodiment shown in Figures 3 and 4. In this case like parts have been given the same reference numerals as those in Figures 3 and 4, but with the prefix 100. As in Figure 5, the disc 172 of the magnet assembly 122 is bent such that the portion 184 of the disc containing the apertures 180 is still substantially flat but is spaced from the magnet 126. An annular plastics disc 186 is positioned in the space between the portion 184 of the disc 172 and the magnet 126. The plastics disc 186 is preferably black in colour (or of any suitable non-reflective colour) to provide improved optical contrast between the apertures 180 in the disc 174 and the surface of the disc intermediate the apertures. This arrangement is particularly beneficial where the number of apertures 180 is increased to provide a greater number of electrical pulses per revolution of the magnet assembly 122. The plastics disc 186 is preferably moulded with two pairs of upstanding spaced lugs 188,190 on the side of the plastics disc adjacent the magnet 126. The lugs 188,190 act to locate and position the magnet 126 and the temperature compensator 128 during assembly of the magnet assembly 122. The bush 174 (which is preferably of aluminium) is then placed in position and the end rolled over (the assembly shown in Figure 7 is prior to rolling over the end of the bush) to secure the components of the magnet assembly 122 together.

The shape of the disc 72' and 172 in Figures 5 to 7 improves the strength of the disc, and allows the disc to be made from thin material. The plastics annular disc 186 may be replaced by a disc of non-ferrous material which is cast in one-piece.

By improving the optical contrast scanned by the optical sensor 46, the optical sensor produces electrical pulses which are a much sharper square wave signal with better signal strength. This allows the electronic circuitry associated with the optical sensor 46 to be made from cheaper components.

As a variation on the embodiments shown in Figures 3 and 4; Figure 5; and Figures 6 and 7 the mounting means may be formed from two pieces.

Further alternatives to all the above embodiments include the magnet assembly being secured to the end of the drive shaft by any suitable means other than an interference or force fit and the metallic mounting means being made from any suitable non-ferrous or non-magnetic metal or metal alloy. The speedometer may be used on other vehicles besides motor vehicles. The present invention has the further advantage over the prior art of the magnet 26 being re-claimable.

## Claims

1. A speedometer (10) comprising a drive shaft (12) rotatable about an axis; a magnet assembly (22) fixedly connected to one end (24) of the drive shaft and comprising a magnet (26), a mounting means (30) to which the magnet is secured, the mounting means being secured to the end of the drive shaft, and optical contrast means (32,38) positioned on the opposite side of the magnet to the indicating means; magnetically responsive means (52) spaced from and substantially surrounding an outer circumference of the magnet assembly, the magnetically responsive means being pivotable about the axis in response to rotation of the magnet assembly; and indicating means (56) connected to the magnetically responsive means to provide an indication of speed; characterised in that the mounting means (30) is of heat-resistant plastics material or metallic material.

2. A speedometer as claimed in Claim 1, in which the mounting means is metallic, wherein the metallic mounting means comprises a plate (32) which is substantially annular and flat, and a cylindrical portion (34) projecting away from a side of the plate directed towards the indicating means (56), the magnet (26) being positioned to surround the cylindrical portion.

3. A speedometer as claimed in Claim 2, wherein the cylindrical portion (34) has a free end (44) which is rolled over to secure the magnet (26) to the plate (32).

4. A speedometer as claimed in Claim 2 or Claim 3, wherein the metallic mounting means is die-cast in one-piece.

5. A speedometer as claimed in any one of Claims 2 to 4, wherein the optical contrast means comprises shaped portions (38) which project away from the side (40) of the metallic mounting means directed away from the indicating means (56), the shaped portions being substantially equidistantly spaced around the outer circumference of the side in a castellated formation, and being substantially the same shape and size, the shaped portions having a surface which is of optical contrast to the surface of the metallic mounting means intermediate the shaped portions.

6. A speedometer as claimed in Claim 5, wherein the surface of each shaped portion (38) is polished, and the surface of the metallic mounting means intermediate the shaped portions is roughened.

7. A speedometer as claimed in Claim 1, wherein the mounting means is die cast from metallic material, or moulded from heat-resistant plastics, in one-piece in the form of a bush (74).

8. A speedometer as claimed in Claim 7, wherein the optical contrast means comprises a disc (72) which is substantially annular, and which is positioned on the opposite side of the magnet (26) to the indicating means (56), the disc having a number of apertures (80) formed therein adjacent its outer circumference (82), the apertures being substantially equidistantly spaced around the outer circumference, and being substantially the same shape and size, the apertures forming an optical contrast to the surface of the disc intermediate the apertures.

9. A speedometer as claimed in Claim 8, wherein the disc (72') is bent such that the portion (84) of the disc containing the apertures (80) is spaced from the magnet (26).

10. A speedometer as claimed in Claim 9, wherein an annular plastics disc (186) is positioned in the space between the portion (184) of the disc (172) and the magnet (126), the plastics disc being of a colour to enhance the optical contrast between the apertures (180) in the disc and the surface of the disc between the apertures.

11. A speedometer as claimed in Claim 10, wherein the plastics disc (186) has upstanding lugs (188,190) between which the magnet (126) is located.

12. A speedometer as claimed in Claim 10 or Claim 11, wherein the disc (172) is of polished non-ferrous metallic material, and the plastics disc (186) is black in colour.

13. A speedometer as claimed in any one of Claims 1 to 12, wherein the mounting means has a bore (42,78) which is centrally positioned and which has a diameter of a size to make an interference fit with the one end (24) of the drive shaft (12).

## Patentansprüche

1. Ein Geschwindigkeitsmesser (10) mit einer Antriebswelle (12), die um eine Achse drehbar ist, einem Magnetaufbau (22), der fest mit einem Ende (24) der Antriebswelle verbunden ist und einen Magnet (26), ein Befestigungsmittel (30), an welchem der Magnet gesichert ist, wobei das Befestigungsmittel an dem Ende der Antriebswelle gesichert ist, und optische Kontrastmittel (32, 38) umfaßt, die auf der gegenüberliegenden Seite des Magnets zu dem Anzeigemittel positioniert sind, magnetischen Ansprechmitteln (52), die von einem äußeren Umfang des Magnetaufbaus beabstandet sind und diesen im wesentlichen umgeben, wobei das magnetische Ansprechmittel um die Achse in Abhängigkeit von der Rotation des Magnetaufbaus drehbar ist, und Anzeigemitteln (56), die mit den magnetischen Ansprechmitteln verbunden sind, um eine Geschwindigkeitsanzeige zu liefern, dadurch gekennzeichnet, daß das Befestigungsmittel (30) aus wärmebeständigem Kunststoffmaterial oder Metallmaterial besteht.

2. Ein Geschwindigkeitsmesser nach Anspruch 1, in welchem das Befestigungsmittel aus Metall besteht, worin das Metallbefestigungsmittel eine Platte (32), welche im wesentlichen ringförmig und eben ist, und einen zylindrischen Abschnitt (34) umfaßt, der von einer Seite der Platte weg in Richtung auf das Anzeigemittel (56) vorspringt, wobei der Magnet (26) positioniert ist, um den zylindrischen Abschnitt zu umgeben.

3. Ein Geschwindigkeitsmesser nach Anspruch 2, worin der zylindrische Abschnitt (34) ein freies Ende (44) aufweist, welches umgewalzt ist, um den Magnet (26) an der Platte (32) zu sichern.

4. Ein Geschwindigkeitsmesser nach Anspruch 2 oder 3, worin das Metallbefestigungsmittel in einem Stück druckgegossen ist.

5. Ein Geschwindigkeitsmesser nach einem der Ansprüche 2 bis 4, worin das optische Kontrastmittel geformte Abschnitte (38) umfaßt, welche von der Seite (40) des Metallbefestigungsmittels vorspringen, das weg von dem Anzeigemittel (56) gerichtet ist, wobei die geformten Abschnitte im wesentlichen gleich um den äußeren Umfang der Seite in einer mit Zinnen versehenen Ausbildung beabstandet sind und im wesentlichen die gleiche Form und Größe aufweisen und die geformten Abschnitte eine Oberfläche aufweisen, welche einen optischen Kontrast zu der Oberfläche des Metallbefestigungsmittels zwischen den geformten Abschnitten aufweist.

6. Ein Geschwindigkeitsmesser nach Anspruch 5, worin die Oberfläche jedes geformten Abschnittes (38) poliert ist, und die Oberfläche des Metallbefestigungsmittels zwischen den geformten Abschnitten aufgerauht ist.

7. Ein Geschwindigkeitsmesser nach Anspruch 1, worin das Befestigungsmittel aus Metallmaterial druckgegossen oder aus wärmebeständigen Kunststoffen gegossen ist und zwar in einem Stück in der Form einer Buchse (74).

8. Ein Geschwindigkeitsmesser nach Anspruch 7, worin das optische Kontrastmittel eine Scheibe (72) umfaßt, welche im wesentlichen ringförmig ist, und welche auf der gegenüberliegenden Seite des Magnets (26) zu dem Anzeigemittel (56) positioniert ist, wobei die Scheibe eine Anzahl von Öffnungen (80) aufweist, die darin benachbart zu ihrem äußeren Umfang (82) ausgebildet sind, die Öffnungen im wesentlichen gleich um den äußeren Umfang herum beabstandet sind und im wesentlichen die gleiche Form und Größe aufweisen und die Öffnungen einen optischen Kontrast zu der Oberfläche der Scheibe zwischen den Öffnungen bilden.

9. Ein Geschwindigkeitsmesser nach Anspruch 8, worin die Scheibe (72') derart gebogen ist, daß der Abschnitt (84) der Scheibe, der die Öffnungen (80) enthält, von dem Magnet (26) beabstandet ist.

10. Ein Geschwindigkeitsmesser nach Anspruch 9, worin eine ringförmige Kunststoffscheibe (186) in dem Raum zwischen dem Abschnitt (184) der Scheibe (172) und dem Magnet (126) positioniert ist, wobei die Kunststoffscheibe eine Farbe aufweist, um den optischen Kontrast zwischen den Öffnungen (180) in der Scheibe und der Oberfläche der Scheibe zwischen den Öffnungen zu steigern.

11. Ein Geschwindigkeitsmesser nach Anspruch 10, worin die Kunststoffscheibe (186) aufrechtstehende Ansätze (188, 190) aufweist, zwischen welchen der Magnet (126) angeordnet ist.

12. Ein Geschwindigkeitsmesser nach Anspruch 10 oder 11, worin die Scheibe (172) aus poliertem Nichteisen-Metallmaterial besteht, und die Kunststoffscheibe (186) eine schwarze Farbe aufweist.

13. Ein Geschwindigkeitsmesser nach einem der Ansprüche 1 bis 12, worin das Befestigungsmittel eine Bohrung (42, 78) aufweist, welche zentral positioniert ist, und welche einen Durchmesser in einer Größe aufweist, um einen Preßsitz mit dem einen Ende (24) der Antriebswelle (12) herzustellen.

## Revendications

1. Tachymètre (10) comprenant un arbre d'entraînement (12) tournant autour d'un axe; un dispositif à aimant (22) raccordé de manière fixe à une extrémité (24) de l'arbre d'entraînement et comprenant un aimant (26), un moyen formant support (30) auquel est fixé l'aimant, le moyen formant support étant fixé à l'extrémité de l'arbre d'entraînement, et un moyen à contraste optique (32, 38) placé sur la face de l'aimant opposée au moyen indicateur; un moyen sensible à un champ magnétique (52) espacé d'une partie périphérique extérieure du dispositif à aimant et entourant sensiblement celle-ci, le moyen sensible à un champ magnétique pouvant tourner autour de l'axe en réponse à la rotation de du dispositif à aimant; et le moyen indicateur (56) étant raccordé au moyen sensible à un champs magnétique pour fournir une indication de la vitesse; caractérisé en ce que le moyen formant support (30) est en matière plastique résistant à la chaleur ou en métal.

2. Tachymètre selon la revendication 1, dans lequel le moyen formant support est métallique, le moyen métallique formant support comprenant une plaque (32) qui est sensiblement annulaire et plate, et une portion cylindrique (34) faisant saillie depuis une face de la plaque dirigée vers le moyen indicateur (56), l'aimant (26) étant positionné de manière à entourer la portion cylindrique.

3. Tachymètre selon la revendication 2, dans lequel la portion cylindrique (34) possède une extrémité libre (44) qui est rabattue de manière à fixer l'aimant (26) à la plaque (32).

4. Tachymètre selon la revendication 2 ou la revendication 3, dans lequel le moyen métallique formant support est moulé sous pression en une seule pièce.

5. Tachymètre selon l'une quelconque des revendications 2 à 4, dans lequel le moyen à contraste optique comprend des portions en relief (38) qui font saillie depuis la face (40) du moyen métallique formant support qui est dirigée du côté opposé au moyen indicateur (56), les portions en relief étant sensiblement équidistantes les unes des autres autour de la périphérie extérieure de la face selon une formation en créneaux, et ayant sensiblement la même forme et la même taille, les portions en relief ayant une surface qui forme un contraste optique avec la surface du moyen métallique formant support entre les portions.

6. Tachymètre selon la revendication 5, dans lequel la surface de chaque portion en relief (38) est polie, et la surface du moyen métallique formant support entre les portions en relief est amatie.

7. Tachymètre selon la revendication 1, dans lequel le moyen formant support est fait d'un métal moulé sous pression, ou d'une matière plastique résistant à la chaleur moulée, en une seule pièce sous la forme d'un manchon (74).

8. Tachymètre selon la revendication 7, dans lequel le moyen à contraste optique comprend un disque (72) qui est sensiblement annulaire, et qui est placé sur la face de l'aimant (26) opposée au moyen indicateur (56), le disque possédant un certain nombre d'ouvertures (80) formées dans le disque et adjacentes à sa périphérie extérieure (82), les ouvertures étant sensiblement équidistantes les unes des autres autour de la périphérie extérieure, et ayant sensiblement la même forme et la même taille, les ouvertures formant un contraste optique avec la surface du disque entre les ouvertures.

9. Tachymètre selon la revendication 8, dans lequel le disque (72') est incurvé de telle sorte que la portion (84) du disque contenant les ouvertures (80) est espacée de l'aimant (26).

10. Tachymètre selon la revendication 9, dans lequel un disque annulaire (186) en matière plastique est placé dans l'espace entre la portion (184) du disque (172) et l'aimant (126), le disque en matière plastique ayant une couleur destinée à augmenter le contraste optique entre les ouvertures (180) ménagées dans le disque et la surface du disque entre les ouvertures.

11. Tachymètre selon la revendication 10, dans lequel le disque (186) en matière plastique possède des pattes verticales (188, 190) entre lesquelles est placé l'aimant (126).

12. Tachymètre selon la revendication 10 ou la revendication 11, dans lequel le disque (172) est fait d'un métal non ferreux poli, et dans lequel le disque en matière plastique (186) est de couleur noire.

13. Tachymètre selon l'une quelconque des revendications 1 à 12, dans lequel le moyen formant support possède un alésage (42, 78) qui est placé au centre et dont le diamètre est tel que cet alésage s'adapte en force sur l'extrémité (24) de l'arbre d'entraînement (12).
